# EUROPÄISCHE PATENTSCHRIFT

(11) **EP 2 754 572 B1**
(45) Veröffentlichungstag und Bekanntmachung des Hinweises auf die Patenterteilung: **10.10.2018**
(21) Anmeldenummer: 13151027.3
(22) Anmeldetag: 11.01.2013
(51) Int. Cl.: B60G 7/00, B60G 9/00, B60G 11/46, B60B 35/08

(54) **Achsaggregat für ein Nutzfahrzeug**
Axle unit for a commercial vehicle
Agrégat d'essieu pour un véhicule utilitaire

(43) Veröffentlichungstag der Anmeldung: 16.07.2014
(73) Patentinhaber: Schmitz Cargobull AG, 48341 Altenberge (DE)
(72) Erfinder: Reschka, Michael, 48624 Schöppingen (DE); Sommer, Bernd, 99867 Gotha (DE)
(74) Vertreter: Cohausz & Florack

(56) Entgegenhaltungen:
- EP-A1- 1 894 754
- EP-B1- 1 508 459
- WO-A1-2012/078031
- DE-A1-102008 061 190
- DE-C2- 19 946 802
- US-A- 3 707 298
- US-A- 5 328 159
- US-A1- 2006 237 940
- US-B1- 6 209 895

## Beschreibung

Die Erfindung betrifft ein Achsaggregat für ein Nutzfahrzeug. Ein solches Achsaggregat umfasst üblicherweise einen Achskörper, mindestens einen mit dem Achskörper verbundenen und quer zu dieser ausgerichteten Längslenker und mindestens ein die Achskörper umgreifendes U-förmiges Klemmelement, das den Achskörper umgreifend gegen den Längslenker verspannt und den Achskörper an dem Längslenker hält, wobei zwischen dem Klemmelement und dem Achskörper ein Schalenelement angeordnet ist, über das das Klemmelement auf den Achskörper wirkt und das eine dem Achskörper zugeordnete Anlagefläche aufweist, mit der es bei fertig montiertem Achsaggregat dicht an der zugeordneten Umfangsfläche des Achskörpers anliegt. Ein solches Achsaggregat ist aus der EP 1 894 754 A1 bekannt.

Wie des Weiteren beispielsweise aus der DE 199 46 802 C2 bekannt, ist bei einem mit einem Achsaggregat dieser Art ausgestatteten Nutzfahrzeug der Längslenker üblicherweise mit seinem einen Ende in einem Schwenklager am Chassis des Nutzfahrzeugs gelagert, so dass der vom Längslenker getragene Achskörper um die Lagerachse des Lagers Schwenkbewegungen ausführen kann. Gleichzeitig ist zwischen dem Längslenker und dem Chassis die jeweilige Federeinheit angeordnet, die bei modernen Nutzfahrzeugen in der Regel als Luftfedereinheit ausgebildet ist und die Achskörper federnd elastisch gegen das Chassis abstützt. Um die Schwenkbewegungen zu dämpfen, ist der Längslenker zusätzlich durch ein Dämpferelement gegen das Chassis abgestützt. Um die Bauhöhe des Achsaggregats zu minimieren, ist der Längslenker üblicherweise mit einer Abkröpfung versehen, die eine Aufnahme umgibt, in die der Achskörper sitzt.

Das Klemmelement ist in der Praxis üblicherweise als U-förmiger Bügel, in der Fachsprache auch "Bride" genannt, ausgeführt, der auf die Achskörper aufgeschoben wird, so dass seine Schenkel seitlich des Achskörpers angeordnet sind und die Achskörper auf dem die Schenkel verbindenden Basisabschnitt des Klemmelements sitzen, über den die Klemmkraft auf die Achskörper wirkt. Bei fertig montiertem Achsaggregat stehen die Schenkel des bügelförmigen Klemmelements über die vom Achskörper abgewandte Seite des Längslenkers hinaus und greifen mit ihren als Gewindebolzen ausgebildeten Endabschnitten durch korrespondierende Öffnungen des Längslenkers oder einer auf den Längslenker aufgelegten "Bridenplatte". Die Verspannung des Klemmelements erfolgt schließlich durch auf die Schenkel aufgeschraubte und direkt gegen den Längslenker oder die Bridenplatten wirkende Muttern. Um die Belastung zu vergleichmäßigen und die Klemmkräfte zu erhöhen, werden üblicherweise zwei Klemmelemente vorgesehen, von denen das eine auf der einen und das andere in Achsrichtung des Achskörpers versetzt auf der anderen Seite des Längslenkers angeordnet ist.

Ein bei einem Achsaggregat der voranstehend erläuterten Art zwischen dem Achskörper und dem Längslenker angeordnetes Ausgleichselement stellt eine dem Achskörper zugeordnete Aufnahme, in der die Achskörper mit einem höchstens die Hälfte seines Umfangs einnehmenden Umfangsflächenabschnitt formschlüssig sitzt, sowie eine dem Längslenker zugeordnete Stützfläche bereit, über die das Ausgleichselement mindestens abschnittsweise an dem Längslenker abgestützt ist.

Ein grundsätzliches Problem besteht bei Achsaggregaten, bei denen die Achskörper in der voranstehend erläuterten Weise an den jeweiligen Längslenker angebunden ist, darin, das fertigungsbedingt die Form der in der Aufnahme bereitgestellten Anlagefläche abweicht von der Form der Fläche, an die der Achskörper am Längslenker anliegt. Das zwischen dem Längslenker und dem Achskörper angeordnete Ausgleichselement gleicht diese Abweichung aus, indem es auf seiner einen Seite eine an die Form des Achskörpers angepasste Anlagefläche und auf seiner anderen Seite eine an die Form der Aufnahme angepasste Anlagefläche bereitstellt. Dabei kann das Ausgleichselement so ausgelegt sein, dass es sich unter Wirkung der von der Klemmeinrichtung aufgebrachten Klemmkraft selbsttätig so verformt und ausrichtet, dass möglichst große Kontaktflächen zwischen ihm, dem Längslenker sowie dem Achskörper gewährleistet sind.

Im praktischen Einsatz von mit Achsaggregaten der voranstehend erläuterten Art ausgestatteten Nutzfahrzeugen ergibt sich das Problem, dass die Achskörper insbesondere bei einem Bremsvorgang oder beim Anfahren hohe Rotationsmomente aufnehmen müssen, die auch im Bereich der Verbindung zwischen dem Achskörper und dem jeweiligen Längslenker wirken. Diese Momente können so hoch werden, dass es trotz der im Bereich der Verbindung wirkenden Klemmkräfte zu einer Relativbewegung zwischen Achskörper und Längslenker kommen kann. Diese Relativbewegung kann verstärkten Verschleiß des Achskörpers und des Ausgleichselements bis hin zu einer nachhaltigen Beschädigung der Verbindung verursachen.

Zwar könnte die Gefahr einer Relativbewegung von Achskörper und Längslenker durch eine Erhöhung der im Bereich der Verbindung wirkenden Klemmkräfte gemindert werden. Jedoch sind einer solchen Erhöhung material- und auslegungsbedingte Grenzen gesetzt.

Um die mit einer Relativbewegung von Achskörper und Längslenker einhergehende Gefahr zu minimieren, wird das Ausgleichselement bei der Montage beispielsweise durch einen Schweißpunkt fest mit dem Längslenker verbunden. Ergänzend können an der dem Längslenker zugeordneten Seite des Ausgleichselements Vorsprünge vorgesehen sein, die nach Art von Stützböcken das Ausgleichselement gegen den Längslenker abstützen und so dessen Verdrehung verhindern (DE 199 46 802 C2). Ergänzend ist zur Minimierung der Relativbewegungen beispielsweise in der EP 1 508 459 B1 vorgeschlagen worden, auch die Achskörper fest mit dem Ausgleichselement zu verbinden. Hierzu wird beim Stand der Technik mindestens entlang der achsparallel zur Längsachse des Achskörpers sich erstreckenden, in Fahrtrichtung des Nutzfahrzeugs rückwärtig angeordneten Schmalseite des Ausgleichselements eine Verschweißung vorgenommen. Auf diese Weise ist der Achskörper unter der Wirkung des bei einer Bremsung auftretenden Moments unmittelbar gegen das Ausgleichselement abgestützt.

Abgesehen davon, dass die voranstehend erläuterten, im Stand der Technik zur Vermeidung von Relativbewegungen zwischen dem Längslenker und dem Achskörper vorgesehenen Maßnahmen zusätzlichen Montageaufwand mit sich bringen und die im Fall einer Reparatur regelmäßig erforderliche Demontage des Achskörpers erschweren, zeigt sich in der Praxis weiterhin die Gefahr eines erhöhten Achskörperverschleißes im Bereich der Verbindung zwischen Achskörper und Längslenker.

Neben dem voranstehend erläuterten Stand der Technik ist aus der US 3 707 298 A ein Achsaggregat bekannt, bei dem ein U-förmiges Klemmelement über die Halbschale eine Druckkraft auf eine zwischen der Halbschale und einer Achse vorgesehene, ebenfalls halbschalenförmige elastische Schicht ausübt. Die Verspannung der Achse erfolgt hier über die elastische Schicht, welche einerseits eine Verdrehsicherung bilden und andererseits eine federnde Nachgiebigkeit der Befestigung gewährleisten soll. Dabei sitzt die Achse über einen mit ihr über Schweißnähte verschweißten Adapter formschlüssig in einer an dem Längsträger befestigten separaten Aufnahme, auf deren Schmalseiten die Halbschale mit ihren Schmalseiten abgestützt ist.

Aus US 5 328 149 A war ebenfalls eine Achsanordnung bekannt, bei der zwischen einem als Klemmelement dienenden U-förmigen, um den Längslenker gelegten Bügel und der Achse ein Schalenelement angeordnet ist. Wie beim voranstehend erläuterten Stand der Technik ist auch hier zwischen dem Klemmelement und der Achse zusätzlich ein flexibles, U-förmiges Element vorgesehen, das zum Ausgleich von Toleranzen dient. An den freien Enden seiner Schenkel weist das U-förmige Ausgleichselement leistenartige Vorsprünge auf, mit denen es in korrespondierend geformte Nuten in dem Schalenelement greift.

Vor diesem Hintergrund bestand die Aufgabe der Erfindung darin, mit einfachen Mitteln ein Achsaggregat zu schaffen, bei dem einerseits eine einfache Montage und Demontage gesichert ist und bei dem andererseits die Gefahr einer Beschädigung in Folge von Relativbewegungen zwischen Achskörper und Längslenker minimiert ist.

Zur Lösung dieser Aufgabe schlägt die Erfindung ein gemäß Anspruch 1 ausgebildetes Achsaggregat vor.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Achsaggregat für ein Nutzfahrzeug weist in Übereinstimmung mit dem eingangs angegebenen Stand der Technik einen Achskörper, mindestens einen mit dem Achskörper verbundenen und quer zum Achskörper ausgerichteten Längslenker, und ein Klemmelement auf, das gegen den Längslenker verspannt ist und die Achskörper an dem Längslenker hält.

Erfindungsgemäß ist nun zwischen dem Klemmelement und dem Achskörper ein Schalenelement angeordnet, über das das Klemmelement auf die Achskörper wirkt und das mindestens mit einer seiner dem Ausgleichselement zugewandten Schmalseiten am Längslenker abgestützt ist.

Bei einem erfindungsgemäßen Achsaggregat erfolgt die Übertragung der von dem Klemmelement auf die Achskörper ausgeübten Haltekraft über ein zusätzliches Schalenelement. Dieses zusätzliche Schalenelement sorgt für eine Vergrößerung der Anpressfläche, über die die Haltekraft vom jeweiligen Klemmelement auf die Achskörper aufgebracht wird. Anders als beim Stand der Technik ist infolgedessen die Klemmkraftbeaufschlagung nicht auf den unmittelbar vom Klemmelement berührten Flächenabschnitt begrenzt, sondern auf eine um ein Vielfaches größere Fläche verteilt. Dies erlaubt es, bei unveränderter Auslegung des Achsrohrs deutlich höhere Flächenpressungen auf die Achskörper auszuüben.

Dabei ist durch die Abstützung des Schalenelements am Längslenker sichergestellt, dass das Schalenelement selbst auch unter hoher Momentbelastung oder im Fall eines unzureichend stark gespannten Klemmelements stets die Position beibehält, die eine optimale Kraftübertragung auf die Achskörper sicherstellt. Dies erweist sich insbesondere dann als vorteilhaft, wenn der Achskörper rohrförmig ist. Die bei einer erfindungsgemäßen Gestaltung erzielte gleichmäßige und großflächige Verteilung der Presskräfte erlaubt es, auch bei besonders dünnen Achsrohren hohe Klemmkräfte aufzubringen, durch die eine dauerhafte Sicherung gegen ein Verdrehen des Achskörpers relativ zum Längslenker verhindert ist.

Im Ergebnis wird so auf denkbar einfache Weise eine dauerhaft beständige Sicherung des Achskörpers gegen Verdrehen unter hoher Momentbelastung erreicht. Thermische Fügeverfahren, insbesondere ein Verschweißen des Achskörpers mit den mit ihm zusammenwirkenden Bauteilen sind hierzu nicht erforderlich. Stattdessen können alle Bauteile eines erfindungsgemäßen Achskörpers demontiert werden, ohne dass dazu zerstörend auf den Achskörper eingewirkt werden muss. Auf diese Weise kann ein erfindungsgemäßes Achsaggregat nicht nur schnell, unkompliziert und kostengünstig montiert werden, sondern für eine gegebenenfalls erforderliche Reparatur ebenso einfach und kostengünstig demontiert werden.

Um eine einfache Montage zu ermöglichen, erstreckt sich das erfindungsgemäß vorgesehene Schalenelement in Umfangsrichtung jeweils höchstens über die Hälfte des Achskörpers.

Die Form des zur Anlage an den Achskörper kommenden Anlagefläche des Schalenelements ist erfindungsgemäß so an die Form der zugeordneten Umfangsfläche des Achskörpers angepasst, dass das Schalenelement im fertig montierten Zustand mit seiner Anlagefläche dicht an der betreffenden Umfangsfläche des Achskörpers anliegt und eine möglichst große Kontaktzone zwischen dem Achskörper und dem Schalenelement gebildet ist. Im Fall, dass der Achskörper ein im weitesten Sinne zylindrisches Rohr ist, ist das Schalenelement dementsprechend optimaler Weise nach Art einer Zylinderhalbschale geformt.

Die erfindungsgemäße Maßgabe, dass das Schalenelement mit einer seiner Schmalseiten an dem Längslenker abgestützt ist, besagt, dass das Schalenelement mindestens an einer seiner sich achsparallel zur Längsachse des Achskörpers erstreckenden Seiten so festgelegt ist, dass eine Bewegung relativ zum Längslenker unterbunden ist. Optimaler Weise erfolgt diese Abstützung so, dass das Schalenelement in Wirkrichtung des bei normalem Vorwärtsfahrbetrieb im Fall einer Bremsung auf die Achse wirkenden Moments am Längslenker festgelegt ist. Für die Abstützung des Schalenelements kann am Längslenker ein entsprechender Anschlag vorgesehen sein.

Bei einem erfindungsgemäßen Achsaggregat kann wie beim Stand der Technik ein Ausgleichselement vorgesehen sein, das zwischen dem Achskörper und dem Längslenker angeordnet ist, wobei das Stützelement eine dem Achskörper zugeordnete Aufnahme, in der der Achskörper mit einem Umfangsflächenabschnitt formschlüssig sitzt, und eine dem Längslenker zugeordnete Stützfläche aufweist, über die das Ausgleichselement mindestens abschnittsweise an dem Längslenker abgestützt ist. Über ein solches Ausgleichselement lässt sich in Fällen, in denen die Form der Aufnahme des Längslenkers von der Form des zugeordneten Umfangsabschnitts des Achskörpers abweicht, ein sicherer Sitz und eine großflächige Verteilung der im Bereich der Verbindung zwischen Längslenker und Achskörper auftretenden Kräfte gewährleisten.

Auf besonders einfache Weise kann die Abstützung des Schalenelements dadurch erfolgen, dass das Schalenelement über das optional vorhandene Ausgleichselement am Längsträger abgestützt ist. In diesem Fall erfolgt die Abstützung also nicht direkt am Längsträger, sondern das Schalenelement ist am Ausgleichselement abgestützt, das wiederum am Längsträger gehalten ist. Der Vorteil dieser gegenseitigen Abstützung von Ausgleichselement und Schalenelement besteht darin, dass das Ausgleichselement nicht nur eine Bewegung des Schalenelements verhindert, sondern das Schalenelement auch das Ausgleichselement gegen Verschieben sichert. So lässt sich ohne eine gesonderte Befestigung des Ausgleichselements am Längsträger gewährleisten, dass das Ausgleichselement auch unter hoher Momentenbelastung seine Position beibehält.

Dieses vorteilhafte Zusammenwirken von optional vorhandenem Ausgleichselement und Schalenelement kann dadurch unterstützt werden, dass das Schalenelement mit dem Ausgleichselement verkoppelt ist. Die Verkopplung kann beispielsweise dadurch bewerkstelligt werden, dass an dem Ausgleichselement und dem Schalenelement Formteile ausgebildet sind, über die das Ausgleichselement, im Hinblick auf eine leichte Montier- und Demontierbarkeit vorzugweise lösbar, formschlüssig mit dem Schalenelement verbunden ist.

Eine solche Verbindung kann beispielsweise nach Art einer Schwalbenschwanzverbindung ausgebildet sein. Alternativ oder ergänzend zu einer formschlüssigen Verbindung können das Ausgleichs- und das Schalenelement auch durch eine kraft- oder stoffschlüssige Verbindung miteinander verbunden sein. Selbst dann, wenn diese Verbindung unlösbar ist, wird hierdurch die Montage und Demontage des erfindungsgemäßen Achsaggregats nur unwesentlich beeinflusst, da die hierzu erforderlichen Arbeiten auf das Schalen- und das Ausgleichselement beschränkt bleiben und keine entsprechenden Arbeiten am Achskörper vorgenommen werden müssen.

Typischerweise wird auch bei einem erfindungsgemäßen Achsaggregat das Klemmelement wie beim Stand der Technik nach Art konventioneller U-förmiger Briden ausgeführt werden, wobei jeweils pro Längslenker ein Paar solcher Klemmelemente vorgesehen sein wird, von denen das eine Klemmelement auf der einen Seite des Längslenkers und das zweite Klemmelement in Achsrichtung des Achskörpers versetzt auf der anderen Seite des Längslenkers angeordnet ist. Bei einer solchen Verwirklichung der Erfindung kann die Montage dadurch erleichtert werden, dass an der dem Klemmelement zugeordneten Außenseite des Schalenelements eine Führung für das jeweilige Klemmelement ausgebildet ist.

Grundsätzlich kann das optional vorhandene Ausgleichselement jede beliebige seiner Funktion entsprechende Form aufweisen. Im Stand der Technik bewährte Ausgleichselemente sind ebenfalls schalenförmig und haben dementsprechend eine erste sich in Längsrichtung des Achskörpers erstreckende Schmalseite und eine sich auf der gegenüberliegenden Seite des Achskörpers und ebenfalls in deren Längsrichtung erstreckende zweite Schmalseite. Das Schalenelement liegt dann mit mindestens einer seiner Schmalseiten an der jeweils zugeordneten Schmalseite des Ausgleichselements an.

Sofern ein Ausgleichselement vorhanden ist, kann es abhängig von der übrigen Konstruktion und Auslegung des Achsaggregats ausreichen, wenn das Ausgleichs- und das Schalenelement gemeinsam nur einen Teil des Umfangs des Achskörpers abdecken. Eine optimale Wirkung des erfindungsgemäß vorgesehenen Schalenelements lässt sich jedoch dadurch erreichen, wenn das Schalenelement und das Ausgleichselement gemeinsam den zugeordneten Umfang des Achskörpers vollständig umgeben.

Eine zuverlässige beidseitige Abstützung des Schalenelements an dem Längslenker kann dabei dadurch erreicht werden, dass die in Umfangsrichtung gemessene Gesamtlänge des Schalenelements in Umfangsrichtung ein gewisses Übermaß gegenüber der Umfangslänge des zugeordneten Umfangs des Achskörpers aufweist, so dass das Schalenelement unter Wirkung des Klemmelements in entsprechender Weise zusammengepresst und unter einem gewissen Anpressdruck in Anlage an dem Längslenker oder dem optional vorhandenen Ausgleichselement liegend gehalten ist, über das das Schalenelement gegebenenfalls an dem Längslenker abgestützt ist. Der Vorteil einer solchen Ausgestaltung liegt darin, dass auf diese Weise ein sattes, dichtes Anliegen des Schalenelements an dem zugeordneten Umfangsabschnitt des Achskörpers auch bei toleranzbehafteten Bauteilen sicher gewährleistet ist.

In der Praxis kann ein solcher Toleranzausgleich auch dadurch geschaffen werden, dass das Schalenelement in mindestens zwei Teile aufgeteilt ist, die in Umfangsrichtung aufeinander folgend jeweils einen Teilbereich der dem Schalenelement zugeordneten Umfangsfläche des Achskörpers abdecken. Indem die Teile des Schalenelements durch einen Verformungsabschnitt miteinander verbunden sind, der sich während der Montage des Achsaggregats in Folge des Verspannens des Klemmelements verformt, kann sich die Form des Schalenelements im Zuge der Montage selbsttätig an die jeweils gegebene Form des Achskörpers anpassen. Dabei kann der Verformungsabschnitt beispielsweise aus einem hierzu besonders geeigneten, vom Werkstoff der Teile des Schalenelements abweichenden Material separat hergestellt und anschließend in geeigneter Weise mit den Teilen des Schalenelements verbunden sein.

Alternativ ist es selbstverständlich ebenso möglich, die Teile und den Verformungsabschnitt des Schalenelements einstückig herzustellen. In der Praxis kann der Verformungsabschnitt auch dadurch gebildet werden, dass der Verformungsabschnitt durch mindestens einen die Teile des Schalenelements verbindenden Steg gebildet ist. Besonders geeignet für diese Ausgestaltung sind Schalenelemente, die aus einem Metallwerkstoff hergestellt sind. Dabei kann der Verformungsabschnitt problemlos so ausgelegt werden, dass er elastisch nachgiebig ist. Durch eine solche elastische Nachgiebigkeit kann beispielsweise das positionsgenaue Ausrichten des Schalenelements bei der Montage vereinfacht werden.

Bei bestimmten Anwendungen kann es alternativ auch zweckmäßig sein, wenn die Teile des Schalenelements voneinander unabhängig, also lose sind und dementsprechend unabhängig voneinander am Achskörper angeordnet werden können. Dies kann beispielsweise dann vorteilhaft sein, wenn aufgrund von Fertigungstoleranzen oder anderen baulichen Vorgaben nicht über den vollen vom Klemmelement umgriffenen Umfangsabschnitt zwischen dem Achskörper und dem Klemmelement ausreichend Raum für die Positionierung eines Schalenelements zur Verfügung steht.

Im Hinblick auf den Ausgleich von Toleranzen kann es darüber hinaus auch vorteilhaft sein, wenn vor der Fertigmontage des Achsaggregats die dem Achskörper zugeordnete Anlagefläche des Schalenelements eine von der Form der zugeordneten Umfangsfläche des Achskörpers abweichende Form besitzt und sich das Schalenelement aufgrund einer ihm eigenen Nachgiebigkeit während der Montage des Achsaggregats in Folge des Verspannens des Klemmelements so verformt, dass seine Anlagefläche bei fertig montiertem Achsaggregat dicht an der zugeordneten Umfangsfläche des Achskörpers anliegt.

Nachfolgend wird die Erfindung anhand von Ausführungsbeispielen näher erläutert. Es zeigen jeweils schematisch und nicht maßstäblich:

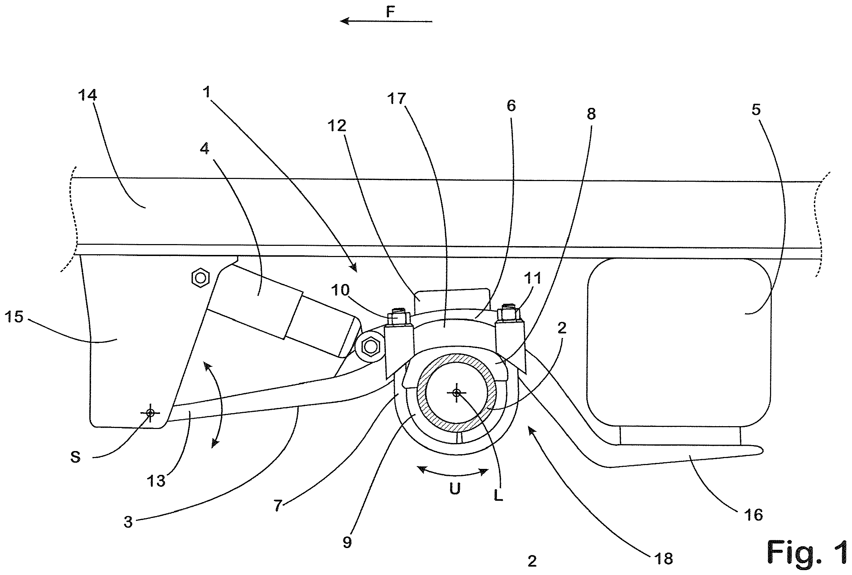

- Fig. 1: ein Achsaggregat in seitlicher, teilgeschnittener Ansicht;
- Fig. 2: eine Verbindung zwischen einem Ausgleichselement und einem Schalenelement in seitlicher Ansicht;
- Fig. 3: ein Schalenelement in perspektivischer Ansicht;
- Fig. 4: ein Schalenelement in einer Ansicht von oben;
- Fig. 5: das Schalenelement gemäß Fig. 4 in seiner frontalen Ansicht;
- Fig. 6: ein Schalenelement in einer Ansicht von oben;
- Fig. 7: das Schalenelement gemäß Fig. 6 in seiner frontalen Ansicht;
- Fig. 8: ein Schalenelement in einer Ansicht von oben;
- Fig. 9: das Schalenelement gemäß Fig. 8 in seiner frontalen Ansicht;
- Fig. 10: einen Ausschnitt des Achsaggregats gemäß Fig. 1 in einer Vormontagestellung in seitlicher Ansicht;
- Fig. 11: den Ausschnitt des Achsaggregats gemäß Fig. 10 in fertig montierter Stellung in seitlicher Ansicht.

Das Achsaggregat 1 umfasst einen Achskörper 2, einen quer zur Längsachse L des Achskörpers 2 ausgerichteten Längslenker 3, einen Dämpfer 4, einen Luftfederbalg 5, eine Bridenplatte 6, zwei Klemmelemente, von denen hier nur das auf der einen Seite des Längslenkers 3 angeordnete Klemmelement 7 zu sehen ist, ein Ausgleichselement 8, ein Schalenelement 9, vier Spannmuttern, von denen hier nur die dem Klemmelement 7 zugeordneten Spannmuttern 10,11 zu sehen sind, und einen Anschlagdämpfer 12.

Der in konventioneller Weise aus einem dickwandigen Stahlrohr geformte Achskörper 2 weist an seinem dem Längslenker 3 zugeordneten Ende einen zylindrisch geformten, rohrförmigen Endabschnitt auf, an den ein hier der Übersichtlichkeit halber nicht dargestellter Achszapfen befestigt ist, auf dem wiederum ein hier ebenfalls nicht gezeigtes Rad sowie eine ebenfalls nicht dargestellte Bremseinrichtung zum Bremsen des Rads befestigt sind.

Der ebenfalls konventionell ausgebildete Längslenker 3 ist schmiede- oder gießtechnisch hergestellt. Mit seinem in Fahrtrichtung F vorderen Ende 13 ist der Längslenker 3 in einem an der Unterseite eines Längsträgers 14 eines weiter nicht gezeigten Nutzfahrzeug-Chassis befestigten Lagerbocks 15 um eine achsparallel zur Längsachse L des Achskörpers 2 ausgerichtete Schwenkachse S verschwenkbar gelagert. An seinem anderen Endabschnitt 16 ist der Längslenker 3 über den zwischen dem Längsträger 14 und dem betreffenden Endabschnitt eingespannten Luftfederbalg 5 federnd elastisch an dem Längsträger 14 abgestützt. Im zwischen dem Ende 13 und dem Endabschnitt 16 vorhandenen mittleren Abschnitt des Längslenkers 3 ist zudem eine in Richtung des Längsträgers 14 ausgewölbte Abkröpfung 17 geformt, die auf ihrer vom Längsträger 14 abgewandten Seite eine Aufnahme 18 umgrenzt.

Der Dämpfer 4 ist in ebenfalls bekannter Weise jeweils um eine parallel zur Längsachse L ausgerichtete Achse verschwenkbar mit seinem einen Ende am Lagerbock 15 und mit seinem anderen Ende im Scheitelbereich 22 an der dem Lagerbock 15 zugeordneten Seite der Abkröpfung 17 des Längslenkers 3 befestigt.

Mit dem auf dem Längslenker 3 angeordneten, aus einem elastischen Material bestehenden Anschlagdämpfer 12 trifft der Längslenker 3 im Fall eines zu großen Ausschlags gegen die Unterseite des Längsträgers 14. Der Anschlagdämpfer 12 dämpft dabei den Stoß gegen den Längsträger 14 ab.

In der Aufnahme 18 des Längslenkers 3 sitzt der zylindrische Endabschnitt des Achskörpers 2. Dabei ist zwischen dem Längslenker 3 und dem Achskörpers 2 das Ausgleichselement 8 angeordnet. Das Ausgleichselement 8 ist nach Art einer Lagerschale ausgebildet und weist an seiner dem Achskörper 2 zugeordneten Seite eine Aufnahme 19 auf, die von einer nach Art einer Halbzylinderschale geformten Anlagefläche umgrenzt ist. Der Krümmungsradius der Anlagefläche der Aufnahme 19 ist dabei so an den Umfangsradius des in der Aufnahme 18 sitzenden Endabschnitts des Achskörpers 2 angepasst, dass das Ausgleichselement 8 im fertig montierten Zustand dicht und formschlüssig an der zugeordneten Umfangsfläche 20 des Achskörpers 2 anliegt. Gleichzeitig ist an der dem Längslenker 3 zugeordneten Seite des Ausgleichselements 8 eine Stützfläche 21 ausgebildet, deren Kontur an den Verlauf der Abkröpfung 17 so angepasst ist, dass bei fertig montiertem Achsaggregat 1 das Ausgleichselement 8 formschlüssig im Scheitelbereich 22 der Abkröpfung 17 fixiert ist. Dabei nimmt die Aufnahme 19 des Ausgleichselements 8 die Hälfte des Umfangs des in der Aufnahme 19 sitzenden Endabschnitts des Achskörpers 2 auf. In Umfangsrichtung U ist die Aufnahme 19 des Ausgleichselements 8 dabei durch jeweils eine Schmalseite 23,24 begrenzt, die sich achsparallel zur Längsachse L des Achskörpers 2 erstreckt.

Von den beiden zum Halten des Achskörpers 2 an dem Längslenker 3 vorgesehenen Klemmelementen ist das hier sichtbare Klemmelement 7 auf der der Außenseite des Nutzfahrzeugs zugewandten Seite des Längslenkers 3 angeordnet, während das genauso geformte, hier nicht sichtbare zweite Klemmelement in Längsrichtung L versetzt auf der anderen Seite des Längslenkers 3 angeordnet ist. Die Klemmelemente 7 sind dabei jeweils als U-förmige Bügel geformt. Die freien Endabschnitte der Schenkel der Klemmelemente 7 sind jeweils nach Art von Gewindebolzen ausgebildet. Dabei ist die Länge der Schenkel der Klemmelemente jeweils so bemessen, dass ihre freien Endabschnitte im fertig montierten Zustand seitlich des Achskörpers 2 verlaufen und in Richtung des Längsträgers 14 über den Längslenker 3 hinausstehen. Dabei durchgreifen sie zugeordnete Öffnungen der Bridenplatte 6, die auf der dem Längsträger 14 zugeordneten Seite des Längslenkers 3 liegt. Gegen die Bridenplatten ist das jeweilige Klemmelement 7 mittels der Spannmuttern 10,11 verspannt, die auf den jeweils über die Bridenplatte 6 hinausstehenden Abschnitt der Schenkel des Klemmelements 7 aufgeschraubt sind.

Der die Schenkel des jeweiligen Klemmelements 7 verbindende Basisabschnitt ist dabei dem Umfang des in der Aufnahme 19 sitzenden Endabschnitts des Achskörpers 2 folgend so ausgerundet, dass zwischen dem Achskörper 2 und dem Basisabschnitt des Klemmelements 7 ausreichend Platz für das zwischen den Klemmelementen 7 und dem Achskörper 2 angeordnete Schalenelement 9 vorhanden ist. Die Breite B des Schalenelements 9 ist dabei so bemessen, dass in fertig montierter Stellung die parallel zueinander ausgerichteten Klemmelemente 7 gemeinsam mit ihrem jeweiligen Basisabschnitt auf die Außenseite des Schalenelements 9 wirken.

Das Schalenelement 9 ist ebenfalls nach Art einer Zylinderhalbschale ausgebildet und umgrenzt mit seiner dem Achskörper 2 zugeordneten Anlagefläche eine Aufnahme 25, die den Umfang des dem Längslenker 3 zugeordneten Endabschnitts zur anderen Hälfte aufnimmt. Dabei ist auch die Aufnahme 25 des Schalenelements 9 in Umfangsrichtung U jeweils durch eine Schmalseite 26,27 begrenzt. Mindestens eine der Schmalseiten 26,27 liegt an der jeweils zugeordneten Schmalseite 23,24 des Ausgleichselements 8 an, wobei optimaler Weise beide Schmalseiten 26,27 des Schalenelements an der ihnen jeweils zugeordneten Schmalseite 23,24 des Ausgleichselements 8 abgestützt sind.

Abhängig von der Gestaltung und Auslegung des beispielsweise aus einem Stahl- oder Leichtmetallblechmaterial geformten Schalenelements 9 werden in Folge der durch die Klemmelemente 7 aufgebrachten Anpresskräfte das Ausgleichselement 8 und das Schalenelement 9 im Bereich ihrer aneinander liegenden Schmalseiten 23,24;26,27 mit einem gewissen Anpressdruck gegeneinander gedrückt.

Der Anpressdruck ist abhängig vom vor der Montage vorhandenen, in Umfangsrichtung U gemessenen Abstand der Schmalseiten 26,27 bzw. der ebenfalls in Umfangsrichtung gemessenen Länge der die Aufnahme 25 begrenzenden Anlagefläche 28 des Schalenelements 9 gegenüber der Umfangslänge des dem Schalenelement 9 zugeordneten Umfangsflächenabschnitts des Achskörpers 2. Im Fall, dass Längengleichheit oder ein Übermaß vorliegt, ist das Schalenelement 9 mit seinen beiden Schmalseiten 26,27 an den zugeordneten Schmalseiten 23,24 des Ausgleichselements 8 und dementsprechend auch am Längslenker 3 abgestützt.

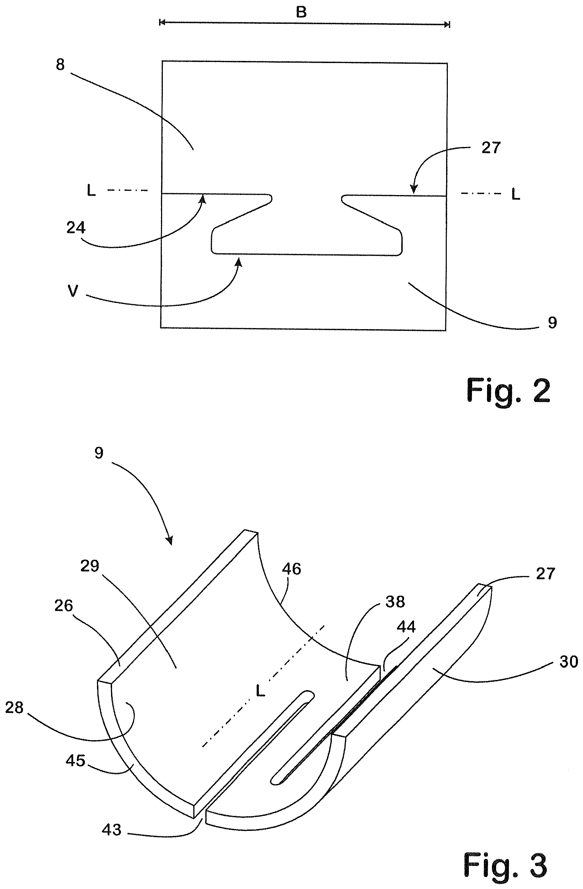

Liegt dagegen ein Untermaß vor, so wird das Schalenelement 9 so montiert, dass es zumindest mit seiner in Fahrtrichtung F gesehen hinteren Schmalseite 27 an der zugeordneten hinteren Schmalseite 24 des Ausgleichselements 8 abgestützt ist. Um in diesem Fall sicherzustellen, dass die Abstützung auch unter Last erhalten bleibt, können das Schalenelement 9 und das Ausgleichselement 8 über eine Schwalbenschwanzverbindung V formschlüssig lösbar miteinander verkoppelt werden (Fig. 2). Alternativ oder ergänzend können das Schalenelement 9 und das Ausgleichselement 8 bei ordnungsgemäßer Montage im Bereich der zwischen ihren hinteren Schmalseiten 24,27 vorhandenen Stoßfuge miteinander verklebt, verschweißt oder durch andere Mittel fest verbunden werden.

Um im für die Praxis besonders vorteilhaften Fall einer beidseitigen Abstützung des Schalenelements 9 im Sinne eines Toleranzausgleichs eine selbsttätige Anpassung der Form des Schalenelements 9 an die Form des zugeordneten Endabschnitts des Achskörpers 2 zu ermöglichen, kann, wie in den Figuren 3 - 9 gezeigt, das Schalenelement 9 durch eine in Richtung der Längsachse L sich erstreckende Teilung in zwei oder mehr Teile 29,30;31,32,33;34,35;36,37 unterteilt werden, von denen benachbart zueinander angeordnete Teile 29,30;31,32,33;34,35;36,37 jeweils über einen Verformungsabschnitt 38;39,40;41;42 miteinander verbunden sind. Die mindestens zwei Teile 29,30;31,32,33;34,35;36,37 decken dann mit den zwischen ihnen jeweils angeordneten Verformungsabschnitten 38;39,40;41,42 in Umfangsrichtung U aufeinander folgend jeweils einen Teilbereich der dem Schalenelement 9 zugeordneten Umfangsfläche des Achskörpers 2 ab.

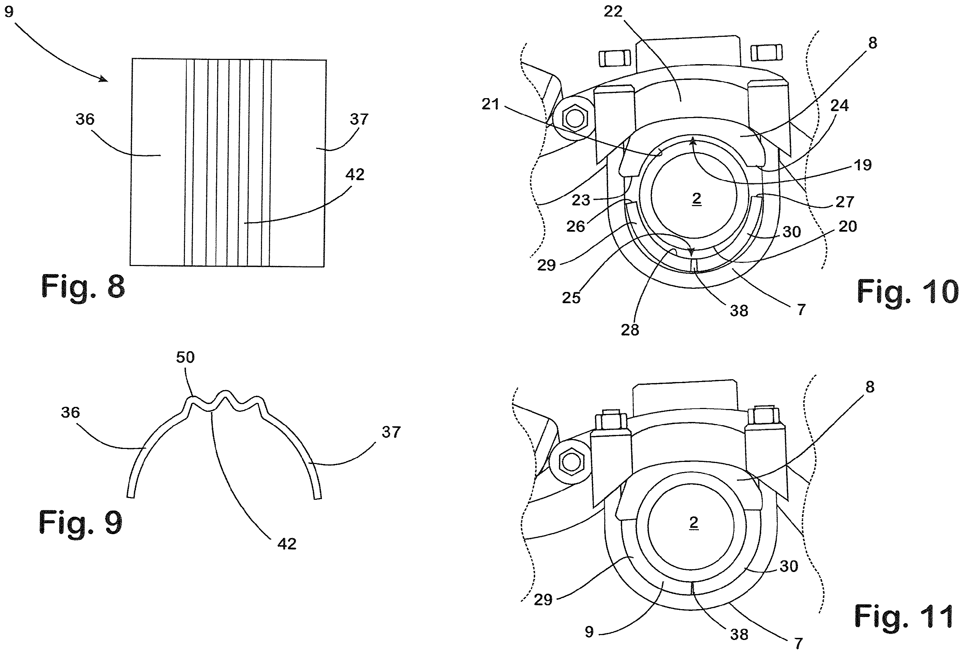

Die Funktion des jeweiligen Verformungsabschnitts 38;39,40;41;42 besteht dabei darin, dass er sich, wie in den Figuren 10,11 angedeutet, bei der Montage des Achsaggregats 1 unter den über die Klemmelemente 7 auf das jeweilige Schalenelement 9 aufgebrachten Kräfte so verformt, dass sich die jeweiligen Teile 29,30;31,32,33;34,35;36,37 des jeweiligen Schalenelements 9 trotz möglicherweise bestehender toleranzbedingter Formabweichungen mit ihrer jeweiligen Anlagefläche 28 formschlüssig dicht an den ihnen zugeordneten Umfangsflächenabschnitt des Achskörpers anlegen und gleichzeitig in Anlage an der jeweils zugeordneten Schmalseite 23,24 des Ausgleichselements 8 gehalten werden.

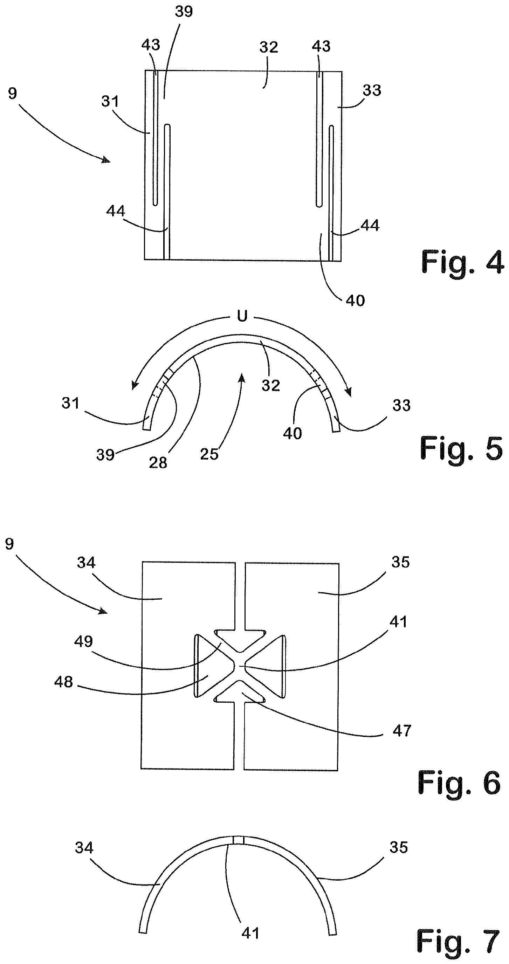

Um eine entsprechende Verformbarkeit des jeweiligen Verformungsabschnitts 38;39,40;41;42 zu bewerkstelligen, können in den jeweiligen Verformungsabschnitten 38;39,40 parallel zur Längsachse L ausgerichtete und sich über einen Teil der Breite B des Schalenelements 9 erstreckende Schnitte 43,44 eingebracht werden, wobei die Schnitte 43,44 jeweils wechselweise von der einen und der anderen Stirnseite 45,46 in den jeweiligen Verformungsabschnitt 38;39,40 eingebracht werden können, um eine gleichmäßige Verformung zu erreichen (Figuren 4,5;6,7). Alternativ können durch entsprechende Ausstanzungen 47,48 im Bereich des jeweiligen Verformungsabschnitts 41 schmale Stege 49 ausgebildet werden, die die Teile 34,35 des betreffenden Schalenelements 9 verbinden und sich aufgrund ihrer Schmalheit und Ausrichtung bei der Montage leicht verformen lassen. Schließlich ist es auch denkbar, die Verformbarkeit des Verformungsabschnitts 42 durch eine gezielt eingebrachte, sich parallel zur Längsachse L erstreckende Faltung 50 oder Materialschwächung zu erzielen (Fig. 8,9).

### BEZUGSZEICHEN

- 1: Achsaggregat
- 2: Achskörper
- 3: Längslenker
- 4: Dämpfer
- 5: Luftfederbalg
- 6: Bridenplatte
- 7: Klemmelement
- 8: Ausgleichselement
- 9: Schalenelement
- 10,11: Spannmuttern
- 12: Anschlagdämpfer
- 13: vorderes Ende des Längslenkers
- 14: Längsträger
- 15: Lagerbock
- 16: hinterer Endabschnitt des Längslenkers 3
- 17: Abkröpfung
- 18: Aufnahme
- 19: Aufnahme des Ausgleichselements 8
- 20: Umfangsfläche
- 21: Stützfläche des Ausgleichselements 8
- 22: Scheitelbereich der Abkröpfung
- 23,24: Schmalseiten des Ausgleichselements 8
- 25: Aufnahme des Schalenelements 9
- 26,27: Schmalseiten des Schalenelements 9
- 28: Anlagefläche des Schalenelements 9
- 29-37: Teile des jeweiligen Schalenelements 9
- 38-42: Verformungsabschnitte des jeweiligen Schalenelements 9
- 43,44: Schnitte
- 45,46: Stirnseite
- 47,48: Ausstanzungen
- 49: Stege
- 50: Faltung

- B: Breite des Schalenelements 9
- F: Fahrtrichtung
- L: Längsachse des Achskörpers 2
- S: Schwenkachse
- U: Umfangsrichtung
- V: Schwalbenschwanzverbindung

## Patentansprüche

1. Achsaggregat für ein Nutzfahrzeug,
- mit einem Achskörper (2),
- mit mindestens einem mit dem Achskörper (2) verbundenen und quer zu dem Achskörper (2) ausgerichteten Längslenker (3), und
- mit einem U-förmigen Klemmelement (7), das den Achskörper (2) umgreifend gegen den Längslenker (3) verspannt ist und den Achskörper (2) an dem Längslenker (3) hält,
- wobei zwischen dem Klemmelement (7) und dem Achskörper (2) ein Schalenelement (9) angeordnet ist, über das das Klemmelement (7) auf den Achskörper (2) wirkt und das eine dem Achskörper (2) zugeordnete Anlagefläche (28) aufweist, mit der es bei fertig montiertem Achsaggregat (1) dicht an der zugeordneten Umfangsfläche des Achskörpers (2) anliegt,
**dadurch gekennzeichnet, dass**
- das Schalenelement (9) mindestens mit einer seiner dem Längslenker (3) zugewandten Schmalseiten (26,27) am Längslenker (3) abgestützt ist.

2. Achsaggregat nach Anspruch 1, **dadurch gekennzeichnet, dass** das Schalenelement (9) nach Art einer Zylinderhalbschale geformt ist.

3. Achsaggregat nach einem der voranstehenden Ansprüche, **dadurch gekennzeichnet, dass** es ein Ausgleichselement (8) umfasst, das zwischen dem Achskörper (2) und dem Längslenker (3) angeordnet ist, wobei das Ausgleichselement (8) eine dem Achskörper (2) zugeordnete Aufnahme (19), in der der Achskörper (2) mit einem Umfangsflächenabschnitt formschlüssig sitzt, und eine dem Längslenker (3) zugeordnete Stützfläche (21) aufweist, über die das Ausgleichselement (8) mindestens abschnittsweise an dem Längslenker (3) abgestützt ist.

4. Achsaggregat nach Anspruch 3, **dadurch gekennzeichnet, dass** das Schalenelement (9) über das Ausgleichselement (8) an dem Längslenker (3) abgestützt ist.

5. Achsaggregat nach Anspruch 3 oder 4, **dadurch gekennzeichnet, dass** das Schalenelement (9) mit dem Ausgleichselement (8) verkoppelt ist.

6. Achsaggregat nach einem der Ansprüche 3 bis 5, **dadurch gekennzeichnet**, **das**s das Ausgleichselement (8) eine erste sich in Längsrichtung (L) des Achskörpers (2) erstreckende Schmalseite (23) und eine sich auf der gegenüberliegenden Seite des Achskörpers (2) und ebenfalls in deren Längsrichtung (L) erstreckende zweite Schmalseite (24) aufweist.

7. Achsaggregat nach Anspruch 6, **dadurch gekennzeichnet, dass** das Schalenelement (9) mit seinen beiden dem Ausgleichselement (8) zugeordneten Schmalseiten (26,27) unter Anpressdruck an jeweils einer der Schmalseiten (23,24) des Ausgleichselements (8) anliegt.

8. Achsaggregat nach einem der voranstehenden Ansprüche, **dadurch gekennzeichnet, dass** das Schalenelement (9) in mindestens zwei Teile (29,30;31,32,33;34,35;36,37) aufgeteilt ist, die in Umfangsrichtung (U) aufeinander folgend jeweils einen Teilbereich der dem Schalenelement (9) zugeordneten Umfangsfläche des Achskörpers (2) abdecken.

9. Achsaggregat nach Anspruch 7, **dadurch gekennzeichnet, dass** die Teile (29-37) des Schalenelements (9) durch jeweils einen Verformungsabschnitt (38;39,40;41;42) miteinander verbunden sind, der sich während der Montage des Achsaggregats (1) in Folge des Verspannens des Klemmelements (7) verformt.

10. Achsaggregat nach Anspruch 9, **dadurch gekennzeichnet, dass** das Schalenelement (9) einstückig ausgebildet ist.

11. Achsaggregat nach Anspruch 9 oder 10, **dadurch gekennzeichnet, dass** der Verformungsabschnitt (38-42) durch mindestens einen die Teile (29-37) des Schalenelements (9) verbindenden Steg (49) gebildet ist.

12. Achsaggregat nach einem der Ansprüche 9 bis 11, **dadurch gekennzeichnet, dass** der Verformungsabschnitt (38-42) elastisch nachgiebig ist.

13. Achsaggregat nach Anspruch 9, **dadurch gekennzeichnet, dass** die Teile (29-37) des Schalenelements (9) voneinander unabhängig sind.

14. Achsaggregat nach einem der voranstehenden Ansprüche, **dadurch gekennzeichnet, dass** vor der Fertigmontage des Achsaggregats (1) die dem Achskörpers (2) zugeordnete Anlagefläche (28) des Schalenelements (9) eine von der Form der zugeordneten Umfangsfläche des Achskörpers (2) abweichende Form besitzt und **dass** sich das Schalenelement (9) aufgrund einer ihm eigenen Nachgiebigkeit während der Montage des Achsaggregats (1) in Folge des Verspannens des Klemmelements (7) so verformt, dass seine Anlagefläche (28) bei fertig montiertem Achsaggregat (1) dicht an der zugeordneten Umfangsfläche des Achskörpers (2) anliegt.

## Claims

1. Axle unit for a commercial vehicle,
- with an axle body (2),
- with at least one trailing arm (3) connected with the axle body (2) and oriented transversely to the axle body (2), and
- with a U-shaped clamping element (7) which, encompassing the axle body (2), is braced against the trailing arm (3) and holds the axle body (2) on the trailing arm (3),
- wherein a shell element (9) is arranged between the clamping element (7) and the axle body (2), via which the clamping element (7) acts on the axle body (2), and which comprises a bearing surface (28) associated with the axle body (2), with which it rests tightly against the associated circumferential surface of the axle body (2) when the axle unit (1) is completely mounted,
**characterised in that**
- the shell element (9) is supported on the trailing arm (3) by at least one of the narrow sides (26,27) facing the trailing arm (3).

2. Axle unit according to Claim 1, **characterised in that** the shell element (9) is shaped in the form of a cylinder half-shell.

3. Axle unit according to any one of the preceding claims, **characterised in that** it comprises a compensating element (8), which is arranged between the axle body (2) and the trailing arm (3), wherein the compensating element (8) comprises a receptacle (19) associated with the axle body (2) and in which the axle body (2) is positively seated via a peripheral surface section, and wherein it comprises a bearing surface (21) associated with the trailing arm (3) via which the compensating element (8) is at least partially supported on the trailing arm (3).

4. Axle unit according to Claim 3, **characterised in that** the shell element (9) is supported on the trailing arm (3) via the compensating element (8).

5. Axle unit according to Claim 3 or 4, **characterised in that** the shell element (9) is coupled to the compensating element (8).

6. Axle unit according to any one of Claims 3 to 5, **characterised in that** the compensating element (8) has a first narrow side (23) extending in the longitudinal direction (L) of the axle body (2), and a second narrow side (24) also extending in the longitudinal direction (L) but on the opposite side of the axle body (2).

7. Axle unit according to Claim 6, **characterised in that** the shell element (9) with its two narrow sides (26, 27) associated with the compensating element (8) fits against one of the narrow sides (23, 24) of the compensating element (8) under contact pressure.

8. Axle unit according to any one of the preceding claims, **characterised in that** the shell element (9) is divided into at least two parts (29, 30; 31, 32, 33; 34, 35; 36, 37), which successively and respectively cover in the circumferential direction (U) a partial region of the peripheral surface of the axle body (2) associated with the shell element (9).

9. Axle unit according to Claim 7, **characterised in that** the parts (29-37) of the shell element (9) are interconnected via a respective deformation section (38; 39, 40; 41; 42), which is deformed upon assembly of the axle unit (1) as a result of the tensioning of the clamping element (7).

10. Axle unit according to Claim 9, **characterised in that** the shell element (9) is integrally formed.

11. Axle unit according to Claim 9 or 10, **characterised in that** the deformation section (38-42) is formed by at least one web (49) connecting the parts (29-37) of the shell element (9) .

12. Axle unit according to any one of Claims 9 to 11, **characterised in that** the deformation section (38-42) yields elastically.

13. Axle unit according to Claim 9, **characterised in that** the parts (29-37) of the shell element (9) are independent of each other.

14. Axle unit according to any one of the preceding claims, **characterised in that** before the final assembly of the axle unit (1) the bearing surface (28) of the shell element (9) associated with the axle body (2), has a shape that deviates from the shape of the associated peripheral surface of the axle body (2), and **in that** the shell element (9) is so deformed due to its own resilience during assembly of the axle unit (1) as a result of tightening the clamping element (7), that its contact surface (28) fits tightly against the associated peripheral surface of the axle body (2) when the axle unit (1) is fully assembled.

## Revendications

1. Bloc-essieu pour un véhicule utilitaire,
- comprenant un corps d'essieu (2),
- comprenant au moins un bras oscillant longitudinal (3) relié au corps d'essieu (2) et orienté transversalement par rapport au corps d'essieu (2), et
- comprenant un élément de serrage (7) en forme de U, qui est serré contre le bras oscillant longitudinal (3) en enveloppant le corps d'essieu (2) et maintient le corps d'essieu (2) contre le bras oscillant longitudinal (3),
- un élément en coque (9) étant disposé entre l'élément de serrage (7) et le corps d'essieu (2), par le biais duquel élément en coque l'élément de serrage (7) agit sur le corps d'essieu (2) et lequel élément en coque possède une surface d'appui (28) associée au corps d'essieu (2) avec laquelle il repose étroitement contre la surface périphérique associée du corps d'essieu (2) lorsque le bloc-essieu (1) est complètement monté,
**caractérisé en ce que**
- l'élément en coque (9) est appuyée au bras oscillant longitudinal (3) au moins avec l'un de ses côtés étroits (26, 27) faisant face au bras oscillant longitudinal (3).

2. Bloc-essieu selon la revendication 1, **caractérisé en ce que** l'élément en coque (9) est réalisé à la manière d'une demi-coque cylindrique.

3. Bloc-essieu selon l'une des revendications précédentes, **caractérisé en ce qu'**il comporte un élément de compensation (8) qui est disposé entre le corps d'essieu (2) et le bras oscillant longitudinal (3), l'élément de compensation (8) possédant un logement (19) associé au corps d'essieu (2), dans lequel le corps d'essieu (2) repose par complémentarité de formes avec une portion de surface périphérique, ainsi qu'une surface de soutien (21) associée au bras oscillant longitudinal (3), par le biais de laquelle l'élément de compensation (8) est appuyé au moins dans certaines portions au bras oscillant longitudinal (3).

4. Bloc-essieu selon la revendication 3, **caractérisé en ce que** l'élément en coque (9) prend appui contre le bras oscillant longitudinal (3) par le biais de l'élément de compensation (8).

5. Bloc-essieu selon la revendication 3 ou 4, **caractérisé en ce que** l'élément en coque (9) est couplé avec l'élément de compensation (8).

6. Bloc-essieu selon l'une des revendications 3 à 5, **caractérisé en ce que** l'élément de compensation (8) possède un premier côté étroit (23), qui s'étendant dans le sens longitudinal (L) du corps d'essieu (2), et un deuxième côté étroit (24) s'étendant du côté opposé du corps d'essieu (2) et également dans le sens longitudinal (L) de celui-ci.

7. Bloc-essieu selon la revendication 6, **caractérisé en ce que** l'élément en coque (9) repose, par ses deux côtés étroits (26, 27) associés à l'élément de compensation (8), sous pression de serrage respectivement contre l'un des côtés étroits (23, 24) de l'élément de compensation (8).

8. Bloc-essieu selon l'une des revendications précédentes, **caractérisé en ce que** l'élément en coque (9) est divisé en au moins deux parties (29, 30 ; 31, 32, 33 ; 34, 35 ; 36, 37) qui, se suivant successivement dans la direction périphérique (U), recouvrent respectivement une zone partielle de la surface périphérique du corps d'essieu (2) qui est associée à l'élément en coque (9).

9. Bloc-essieu selon la revendication 7, **caractérisé en ce que** les parties (29-37) de l'élément en coque (9) sont reliées entre elles respectivement par une portion de déformation (38 ; 39, 40 ; 41 ; 42), laquelle se déforme en conséquence du serrage de l'élément de serrage (7) pendant le montage du bloc-essieu (1).

10. Bloc-essieu selon la revendication 9, **caractérisé en ce que** l'élément en coque (9) est formé d'une pièce.

11. Bloc-essieu selon la revendication 9 ou 10, **caractérisé en ce que** la portion de déformation (38-42) est formée d'au moins une traverse (49) reliant les parties (29-37) de l'élément en coque (9) .

12. Bloc-essieu selon l'une des revendications 9 à 11, **caractérisé en ce que** la portion de déformation (38-42) est déformable de façon élastique.

13. Bloc-essieu selon la revendication 9, **caractérisé en ce que** les parties (29-37) de l'élément en coque (9) sont indépendantes les unes des autres.

14. Bloc-essieu selon l'une des revendications précédentes, **caractérisé en ce qu'**avant le montage final du bloc-essieu (1), la surface d'appui (28) de l'élément en coque (9) qui est associée au corps d'essieu (2) possède une forme différente de la forme de la surface périphérique associée du corps d'essieu (2), et **en ce que** l'élément en coque (9), du fait d'une élasticité qui lui est propre, se déforme pendant le montage du bloc-essieu (1) en conséquence du serrage de l'élément de serrage (7) de telle sorte que sa surface d'appui (28) repose étroitement contre la surface périphérique associée du corps d'essieu (2) lorsque le bloc-essieu (1) est complètement monté.
